# EUROPEAN PATENT SPECIFICATION

(11) **EP 1 064 739 B1**
(45) Date of publication and mention of the grant of the patent: **01.08.2007**
(21) Application number: 99936149.6
(22) Date of filing: 24.02.1999
(51) Int. Cl.: H04B 10/12

(54) **PROTECTION OF WDM-CHANNELS**
WELLENLÄNGENMULTIPLEXKANALSCHUTZ
PROTECTION DE CANAUX A MULTIPLEXAGE PAR REPARTITION EN LONGUEUR D'ONDE

(30) Priority: 24.02.1998 SE 9800545; 12.05.1998 SE 9801642
(43) Date of publication of application: 03.01.2001
(73) Proprietor: TELEFONAKTIEBOLAGET LM ERICSSON (publ), 164 83 Stockholm (SE)
(72) Inventor: ÖBERG, Magnus, S-129 40 Hägersten (SE); WOOD, Nigel, Robert, Evenley, Blackley, Northants NN13 5SB (GB); HEMGREN, Jonas, S-129 30 Hägersten (SE)
(74) Representative: Holmberg, Martin Tor
(86) International application number: PCT/SE1999/000256
(87) International publication number: WO 1999/044317

(56) References cited:
- EP-A- 0 483 790
- EP-A- 0 507 379
- EP-A2- 0 877 502
- WO-A1-97/45977
- FR-A1- 2 756 693
- US-A- 5 457 555
- US-A- 5 506 833
- EHRHARDT A. ET AL: 'Field transmission experiment of chirped 4/spl times/2.5 Gbit/s WDM signals over 135 km and 4000 km single channel transmission over dispersion compensated standard single-mode fibre trunks' IOOC - ECOC '97 vol. 3, no. 448, 22 September 1997, LONDON: IEE, UK, pages 251 - 254, XP006508507

## Description

### TECHNICAL FIELD

The present invention relates to a protecting individual length channels in a WDM link, ring or bus network in the case of a transmitter, transponder or receiver failure, in particular to a network in which at least one link is protected, and to a node used for such protection.

### BACKGROUND

In telecommunication optical fibres have been used for several years, primarily owing to their large reliability, their insensitivity to electrical interference and their high capacity. Of course, there is a desire in the existing telecommunication networks to use the available optical fibres in their networks as efficiently as possible, in particular for communication over long distances, since such fibres obviously have high installation costs. By introducing wavelength division multiplexing WDM in existing communication systems using optical fibres a plurality of individual wavelength channels can be transmitted on the same optical fibre and thus the information transmitted over the fibre can be multiplied. Thus the need for installing more optical fibres can be postponed. Also, the telecommunication operators of course want to utilize their existing transmission equipment if possible also when changing to WDM systems or at least to utilize their existing equipment to the highest possible extent.

When using WDM in a link built of a single optical fibre pair between two nodes all information from one node to the other one will be transmitted at each instant over on one of the fibres of the pair. Because of the very large information amount transmitted over the fibre pair, a break-down of such a link will be extremely embarrassing. Thus, the ability of a network to restore communication or traffic on a failed link is very important. Protection must be built into links and networks using optical fibres carrying several WDM channels on optical fibres therebetween. Typical devices, in which failures can arise are of course the fibres themselves which can be cut off and the components in the transmission and receiving equipment.

In U.S. patent No. 5,299,293 a protection arrangement is disclosed which can be used in a WDM network. For the case of a faulty electrooptical transmitter, the input signal of the transmitter is coupled to the input of a spare transmitter through a n:1 electrical switch. The spare transmitter includes a tunable laser adapted to transmit the signal on the same wavelength as used by the defective transmitter. In U.S. patent No. 5,457,556 equipment for protecting optical communication to failures of the WDM equipment are disclosed. The published German patent application 44 33 031 discloses redirection of the information flow in an optical line to another line when the first line gets defective. In U.S. patent No. 5.218.465 is described how traffic for some failure can be redirected to another redundant path. A crossconnect switch receives all the input signals and is controllable to switch each signal to the redundant path.

In the published International patent application WO 97/45977 "Channel protection in data-communication and telecommunication systems" an optical fiber network is disclosed using WDM, in which each node comprises at least one standby electrooptical transmitter and at least one standby optoelectrical receiver. A spare wavelength is used by the standby transmitter and receiver. The network is the bus type having traffic circulating through the node, in which the nodes tap off and/or add WDM channels as required.

In U.S. patent 5,506,833 a transmission apparatus and a transmission method are disclosed in which signal processing, current units, spare units and a secondary spare unit are provided. Selectors direct incoming signals so that if one of the current and spare units becomes defective, the corresponding input signal is directed to the secondary spare unit and then to the respective output line. The output lines of the current units are supplied to a multiplexer the output signal of which can be provided to an electro-optical converter to be converted to an optical signal. In the published European patent application 0 507 379 a protection arrangement for an optical transmitter/receiver device is disclosed in which a tunable spare transmit line circuit can be activated for a fault in one of a plurality of optical transmit line circuits to transmit in the wavelength band of the faulty line circuit The output signal of the spare circuit is routed through a wavelength demultiplexer to a power combiner or switch connected in the output line of the faulty circuit. In the published European patent application 0 483 790 a system for switching optical transmission lines is disclosed in which a plurality of parallel optical lines are used. A particular one of the optical lines is used for forwarding data in the case where a transmitter or receiver for the other optical lines becomes faulty.

The paper "Field transmission experiment of chirped 4 x 2.5 Gbit/s WDM signals over 135 km and 4000 km single channel transmission over dispersion compensated standard single-mode fibre trunks" by A. Ehrhardt et al. (European Conference on Optical Communication, ECOC '97, vol. 3, No. 448, pages 251-254), discloses the use of a transponder unit in the context of WDM communications.

### SUMMARY

It is an object of the invention to provide an optical network having protection, in particular including an optical bidirectional link forming or being part of the optical network.

It is a further object of the invention to provide an optical network and nodes to be used in the network having protection working for many cases of different failing components.

It is a further object of the invention to provide nodes to be used in an optical network having protection which can be built from standard components of a relatively robust type, not requiring e.g. tunable lasers.

In a protection arrangement for optical transmitter devices and receiver devices in nodes interconnected by a bidirectional link in a WDM network, a switch is arranged so that when one of the transmitter devices fails, its input signal is connected to a standby transmitter, so that this transmitter forwards the signal on a wavelength not used by the other transmitters. The optical transmitters and receivers of a node of such bidirectional link can be duplicated, a spare optical transmitter and a spare optical receiver being arranged as standby for each ordinary optical transmitter and each ordinary optical receiver. Transponders can be connected to receive the signals to be issued on an optical fiber connecting the nodes, converting the received optical signals to optical signals of well defined wavelengths. The output signals of the transponders are combined in an optical signal combiner or multiplexer and therefrom issued on the optical fiber. In each node, only one spare transponder is arranged as standby for the other, ordinary transponders. By arrangements comprising optical switches and/or optical couplers the optical signals from an ordinary optical transmitter or a spare optical transmitter can be forwarded to the spare transponder and issued thereby on a wavelength separate from the wavelengths used by the ordinary transponders.

Generally a WDM network comprises at least two nodes which are interconnected by a bidirectional optical link. A node in such a network can e.g. comprise at least two pairs of ordinary transmitter devices and ordinary receiver devices so that each pair comprises one ordinary transmitter device and one ordinary receiver device. The devices of such a pair are then arranged to transmit and receive optical signals respectively of only a fixed, individual well defined wavelength band which is separate from the wavelength band used by other pairs.

Such a node can further comprise a pair formed by a spare transmitter device and a spare receiver device. The spare transmitter device and the spare receiver device of this pair are then arranged to respectively transmit and receive optical signals of only a fixed well defined wavelength band different from the wavelength bands in which the ordinary transmitter devices and receiver devices of the other pairs of the node are arranged to transmit and receive respectively optical signals. A switch can be connected in such a way that if one of the ordinary transmitter devices of the node fails, an input signal of said one of the ordinary transmitter devices is connected through the switch to an input of the spare transmitter device.

The ordinary transmitter device of a pair formed by an ordinary transmitter device and an ordinary receiver device of a node can then comprise an ordinary optical transmitter and an ordinary transponder which is connected to the ordinary transmitter. The ordinary optical transmitter is arranged to receive electrical signals and to convert the received electrical signals to issued first optical signals. The ordinary transponder is arranged to receive the first optical signals issued by the ordinary optical transmitter and to convert the received first optical signals to issued second optical signals of the wavelength band, in which the ordinary transmitter device and the ordinary receiver device of the pair are arranged to transmit and receive optical signals respectively. In the same way the spare transmitter device of the pair consisting of a spare transmitter device and a spare receiver device in the node can comprise at least one spare transmitter and a spare transponder connected to the spare transmitter. The spare transponder is then common to all spare transmitters of the node and is connected to said all spare transmitters to convert received signals to issued third optical signals of the wavelength band, in which the spare transmitter device and the spare receiver device of the pair are arranged to transmit and receive optical signals respectively.

The spare transponder included in the spare transmitter device in the node can through a switch be connected to all the ordinary optical transmitters in the node to receive the first optical signals issued by at most one of the ordinary optical transmitters of the node.

Additional objects and advantages of the invention will be set forth in the description which follows, and in part will be obvious from the description, or may be learned by practice of the invention. The objects and advantages of the invention may be realized and obtained by means of the methods, processes, instrumentalities and combinations particularly pointed out in the appended claims.

### BRIEF DESCRIPTION OF THE DRAWINGS

While the novel features of the invention are set forth with particularly in the appended claims, a complete understanding of the invention, both as to organization and content, and of the above and other features thereof may be gained from and the invention will be better appreciated from a consideration of the following detailed description of non-limiting embodiments presented hereinbelow with reference to the accompanying drawings, in which:
Fig. 1 is a block diagram of a bidirectional WDM link having no protection.
Fig. 2 is a block diagram of a first embodiment of a bidirectional link having protection.
Fig. 3 is a block diagram of the same link as shown in Fig. 2 but illustrating the traffic paths after restoration caused by failure of a transponder.
Figs. 4 - 9 are block diagrams of further, different embodiments of a bidirectional link having protection,
Figs. 10 and 11 are block diagrams of 4:1 optical switches of hybrid type, and
Fig. 12 is a block diagram of a hybrid type, cross-bar optical switch.

### DETAILED DESCRIPTION

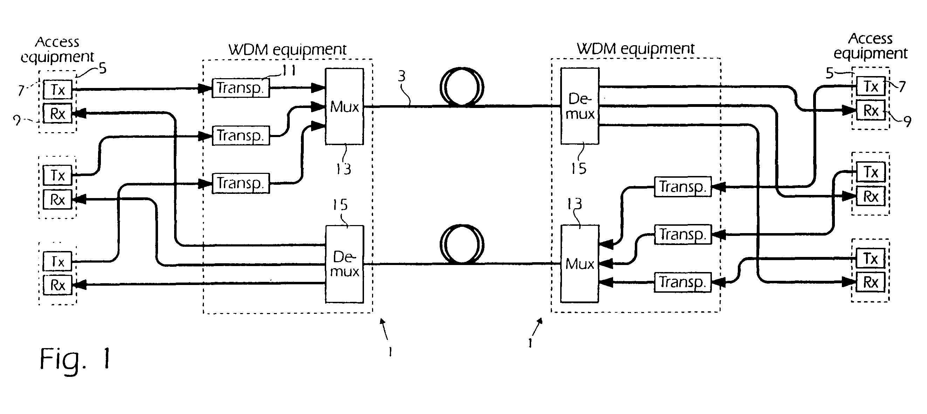

In Fig. 1 a bidirectional WDM link having no protection is illustrated. The link comprises two add and drop nodes 1 connected by one fibre 3 for traffic in a first direction and one fibre for traffic in the opposite direction. The nodes 1 comprise in the embodiment shown three access equipments 5 for three electrical channels, each access equipment 5 comprising a transmitter (Tx) 7 and a receiver (Rx) 9. In the general case N access equipments would be arranged. The transmitters 5 are some kind of electro-optical converters or modulators, such as modulated lasers, providing on their output an optical signal modulated on some wavelength, which can be the same wavelength for all transmitters 7. The optical signal from a transmitter 7 is provided to the input of an associated transponder 11. in which the optical signal from the transmitter 7 is received and is transmitted on a very well defined wavelength. The output fibers of the transponders 11 are connected to an optical multiplexer 13, in which the incoming light signals are combined with or superposed on each other. From the multiplexer 13 the resulting optical signal is transmitted on an optical fibre 3 carrying signals from the considered node 1 to the receiving side of the other node. There, the optical fibre 3 is connected to an optical demultiplexer 15, in which the different wavelengths of the incoming signal are filtered out and are forwarded on optical fibers to the respective receiver 9 in an access equipment 5. the receivers 9 being optoelectrical converters such as suitable PIN-diodes.

In the link illustrated in Fig. 1. the components thereof can of course become defective and stop operating in the intended way. In particular there may be failures in the access equipment 5. in the transmitters 7 and the receivers 9, and in the transponders 11, which are all active optical elements. In order to arrange a protection against such failures a spare or standby channel must be arranged in the link. This standby channel can then be used when one of the components becomes defective. Special arrangements for switching to this standby channel must also be provided and there must also be a redundancy in the access equipment 5.

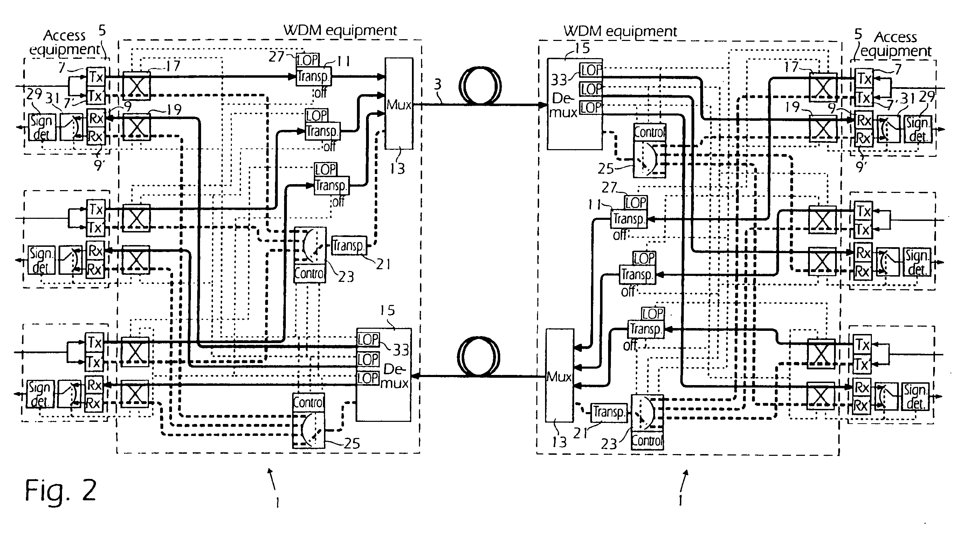

A bidirectional WDM link having such protection is illustrated in the block diagram of Fig. 2. In this link the access equipments 5 contain a 1 + 1 optical protection and in the nodes 1 there is a 1:3, generally a 1:N, protection of the corresponding three WDM channels, in the general case N WDM channels. Each access equipment 5 at one end, which is thus arranged for an own channel, comprises one working or ordinary optical transmitter 7 and one spare or standby optical transmitter Tx' or 7', and one working or ordinary optical receiver 9 and one spare or standby optical receiver Rx' or 9'. These spare transmitters 7' and receivers 9' can be in an operative state all the time, being supplied with power and the transmitters 7' issuing all the time the same signals as the ordinary transmitters 7.

An optical 2x2 cross-bar space switch 17 has first one of its two inputs connected to an ordinary transmitter 7 and its second input connected to the standby transmitter 7 in the pair of ordinary transmitter and standby transmitter in the same access equipment 5. In the same way, an optical 2x2 cross-bar space switch 19 has one of its two outputs connected to an ordinary receiver 7 and another one of its outputs connected to the standby receiver 7' of a pair of ordinary receiver 7 and standby receiver 7' in the same access equipment 5. A cross-bar switch has two inputs and two outputs and can be in one of two states or positions. In the bar state, which is the ordinary state of the cross-bar switches considered here, it connects a first input to a first output and a second input to a second output, making a "parallel" or "bar" connection. In the cross state which is the state considered here when the cross-bar switches receive a control signal, it connects the first input to the second output and the second input to the first output, thus making "crossing" connections.

The WDM equipment in the node I uses a fourth, standby channel, in the general case a (N + 1)-th channel. In the transmitter side thus a transponder 21 for the standby channel is provided, having its output also connected to the multiplexer or combiner 13 and working in parallel with the regular transponders 11. Every transponder 11, 21 will thus transmit on its own specific wavelength. In a cross-bar switch 17 on the transmitting side that output, which in the normal, bar state of the switch is connected to the ordinary transmitter 7, is connected to a regular transponder 11, and its other output, which in the normal, bar state of the cross-bar switch 15 is connected to the spare transmitter 7' is connected to one input of an optical 4:1 space switch 23, this space switch being in the generally case made for switching from one of (N + 1) inputs to one output. Thus three inputs of the 4 : 1 switch 23 are in the normal state of the node 1 connected to a single spare transmitter 7'. Thus there is one input of the 4:1 switch 23 which is not connected to anything. In the normal operation of the node 1. in which no components are defective, the 4:1 switch 23 is in its fourth position, in which it does not receive any signals and does not transmit any signal.

At the receiving side the demultiplexer 15 is arranged for splitting the incoming signal into four individual wavelength bands, in the general case into (N+1) individual, distinct wavelengths or wavelength bands. Three of the outputs of the demultiplexer 15 are connected to that input of the respective cross-bar switch 19. to that input thereof which in the normal state of the node 1, in which no components are defective, to the ordinary receiver 9. That output terminal of the demultiplexer 15, which carries the wavelength band generated by the spare transponder 21 on the transmitting side, is connected to a 1:4 optical space switch 25. in the general case to a 1:(N+ 1) switch. Three outputs of this 1:4 switch 25 are connected to the other one of the inputs of the cross-bar switches 19, to that input thereof which in the normal operation of the node 1 is connected to the spare receiver 9'. The fourth output of the 1:4 switch 25 is terminated and thus does not carry any signals anywhere. This is also the normal position of the 1:4 switch 25 in which all components in the transmitting side and the receiving side of the nodes 1 are working normally.

In the normal state thus all of the cross-bar switches 17, 19 are in their bar state and thus the signals carrying information are transmitted from the ordinary transmitters 7 to the corresponding ordinary transponder 11, via the combiner 13, the fibre link 3 and the demultiplexer 15, to the ordinary receiver 9. The output signals of the hot standby transmitters 7 passes to the 4:1 switch 23 on the transmitting side and are terminated there, since this switch is not in a position for receiving any output from any transmitter, since it is in the fourth position, in the general case its (N + 1)-th position.

Now the different cases will be described which can occur when some device in the bidirectional link of Fig. 2 becomes defective.

An access transmitter 7 can become defective. This is detected by the transponder 11. which is connected to this defective transmitter 7 through the respective one of the cross-bar switches 17 and which makes this detection by finding, through a power detector 27 provided on its input terminal, that there is a loss of power on the input terminal. The power detector 27 of the transponder 11 transmits a signal to the cross-bar switch 17 which is connected to the input terminal of the transponder. The cross-bar switch 17 then switches from its bar state to the cross state. The output signal of the standby transmitter 7', which all the time transmits the same signal as the ordinary transmitter 7 in the same pair of ordinary transmitter and standby transmitter will now instead be directed to the same transponder 11 through the crossed path through the cross-bar switch 17 which has changed its position to the cross state.

For a failure of an access receiver 9, this state is detected by a signal processing circuit 29 inside the access equipment 5, which then changes the output to be delivered from the standby receiver 9' in the same pair of ordinary receiver and standby receiver by changing the position of an electric switch 31. A signal is then transmitted to the cross-bar switch 19. which is connected to the input of this pair. This cross-bar switch 19 then switches from its bar state to the cross state and thus directs the light signal from the demultiplexer 15 directly to the operating standby receiver 9' in the pair.

Also one of the regular transponders 11 can become defective. It is detected on the receiving side by the demultiplexer 15, in particular by the loss of power detected by power measurement devices 33. In the receiving side the 1:4 switch 25 and the 4:1 switch 23 are both switched to the position corresponding to the failed wavelength channel. The 1:4 switch 25 connects its input terminal to that cross-bar switch 19, which is connected to the receiver 9, which was to receive the light signal, which now has disappeared or been lost. The 4:1 switch 23 connects in the corresponding way its input terminal, which is connected through a cross-bar switch 17 to the transmitter 7 belonging to the same access equipment 5 as the receiver 9, which would have received the light signal, which now has disappeared, to its output. Said cross-bar switches 19 and 17 are switched from their bar state to the cross state. Also the transponder 11 is turned off for the wavelength band, on which no signals are received, and the spare transponder 21 on the same receiving side is activated.

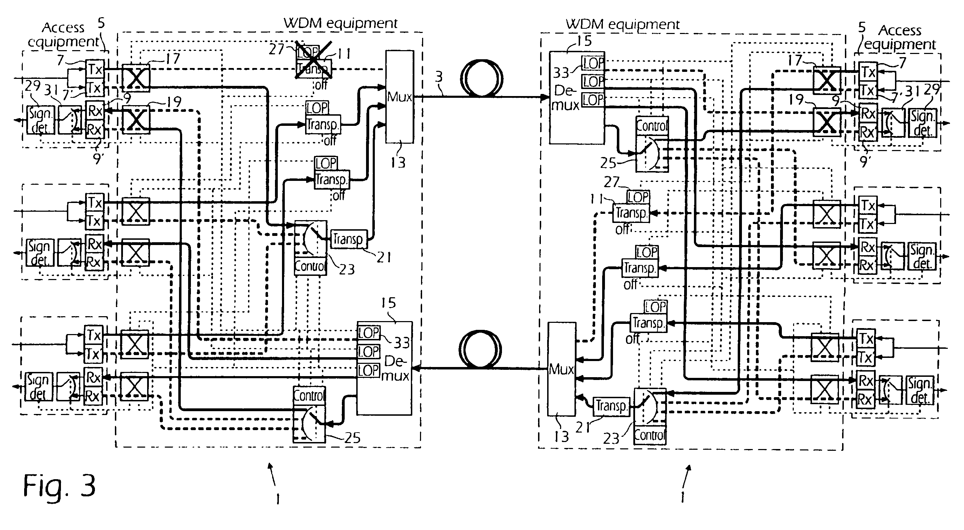

In the transmitting node there will then be a loss of power for the same wavelength band, which is sensed by its demultiplexer 15 and then also the transmitting node will be reconfigured in the same way as the receiving node. For both traffic directions the considered signal now passes from the ordinary transmitter 7, through its associated 2x2 cross-bar switch 17, which now is in a cross state, to 4:1 space switch 23 and then the signal is transmitted to the spare transponder 21 in the transmitting node, from the spare transponder 21 to the wavelength combiner 13, through a fibre 3 and to the demultiplexer 15 and from the demultiplexer to that one of its output terminals, which is connected to the 1:4 switch 25, to the correct cross-bar switch 19, which is in its cross state and then up to the ordinary receiver 9 for this channel. This case is also illustrated in Fig. 3.

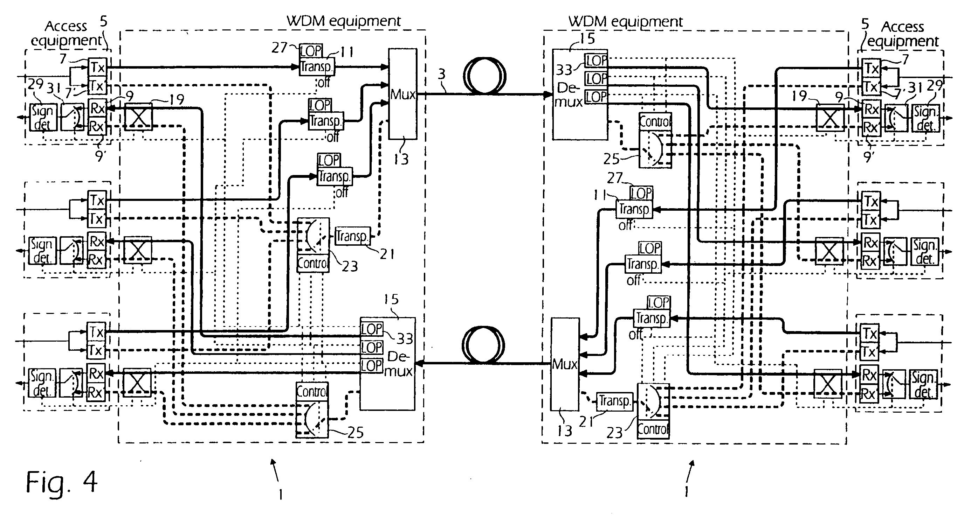

The node construction illustrated in Figs. 2 and 3 can be modified in various ways. Thus, in Fig. 4 the same basic node construction is illustrated, in which the 2x2 cross-bar switches 17 connected to the transmitters 7 and the standby transmitters 7' have been omitted. Then the output signal of the ordinary transmitter 7 is directly connected to the input terminal of the respective ordinary transponder 11 and the standby transmitter 9', which always transmits the same signals as the ordinary transmitter 7 is directly connected to the respective input of the 4: 1 switch 23.

For a failure of one of the ordinary transmitters 7 the transponder 11 connected to the output of this defective transmitter detects loss of power. Then this transponder 11 is turned off and the spare transponder 21 is activated. Both the 4:1 and 1:4 switches 23. 25 are switched to the position corresponding to the position of the defective transmitter. The cross-bar switch 19 connected to the receiver corresponding to the defective transmitter 7 is switched from its bar state to the cross state, so that the ordinary receiver 9 now receives a light signal from the 1:4 switch 25.

In the other node, in which the defective transmitter 7 is located, loss of power is detected by the demultiplexer 15 by the respective power monitor 33 on the output side thereof. Then also here the 4:1 and 1:4 switches 23, 25 are switched to receive or transmit respectively the wavelength channel corresponding to the channel, for which the loss of power has been detected. The cross-bar switch 19 connected to the receiver 9 is switched from its bar state to the cross state, so that the ordinary receiver 9 now receives a light signal from the 1:4 switch 25. In this side also the respective regular transponder 11 is turned off and the spare transponder 21 is activated.

After the switching has been made, the traffic for both directions now passes from the standby transmitter 7' to the 4:1 switch 23. through the spare transponder 21. through the multiplexer 13 and over the fibre link 3. in the receiving side through the demultiplexer 15 to the 1:4 switch 25, from the respective output port of this switch to the cross-bar switch 19. which is in its cross state, up to the ordinary receiver 9.

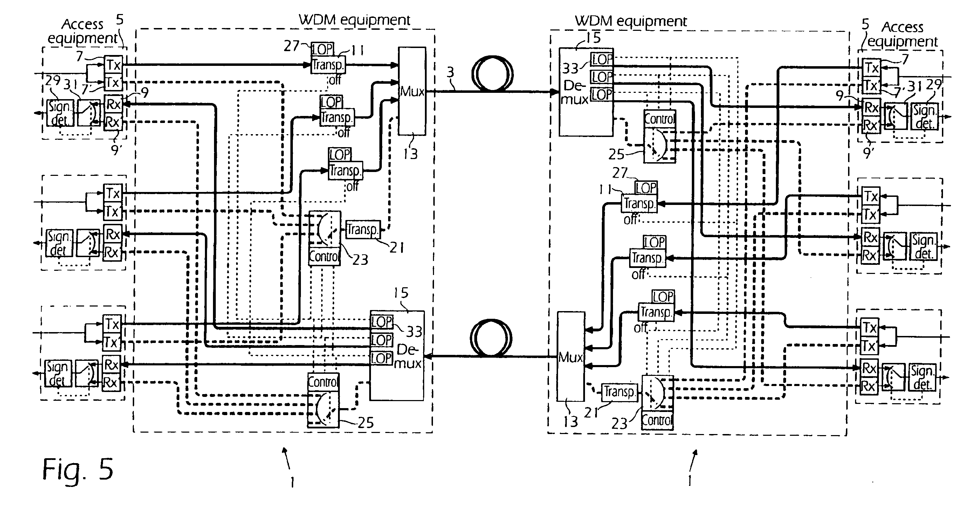

Also the cross-bar switches 19 connected to the receivers 9 and 9' can be removed. This case is illustrated in the diagram of Fig. 5. A defective transmitter 7 is detected in the same way as for the node design of Fig. 4. Also all of the switching of the respective elements is the same. Of course no control signals can be passed to the cross-bar switches 17, 19 since there are none. Instead the redirected light signal will not arrive to the ordinary receiver 9 but to the standby receiver 9' in the respective pair of an ordinary receiver and a standby receiver.

The advantage of the designs of Figs. 4 and 5 is obviously that no cross-bar switches 17, 19 or at most only one cross-bar switch 19 is arranged in the path of light from a transmitter 7 to a receiver 9. The disadvantage is that if a transmitter 7 fails, the spare transponder 21 will be occupied and it will not be possible to use it as a standby for an ordinary transponder 11.

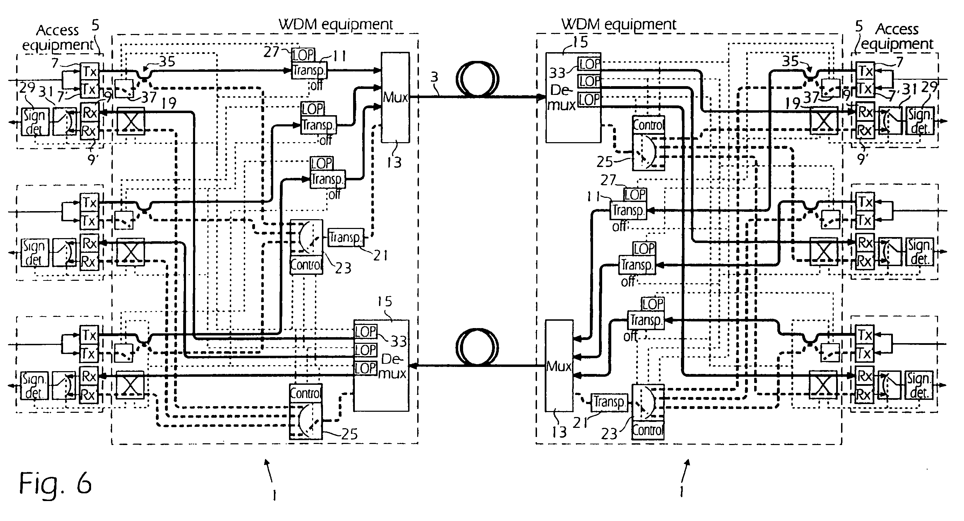

Another modification that is shown in the diagram of Fig. 6 is to replace the cross-bar switches 15 connected to the transmitters by an ordinary 2x2 fibre coupler 35 together with an optical on-off switch 37, the switch being connected between the standby transmitter 7' and the coupler 35. The resulting function will be the same as using a cross-bar switch 17. The advantage of this node design is that there is no cross-bar switch in the path of light after the ordinary transmitter 7. The disadvantage is that the optical power loss for light passing from the transmitters 7 is increased (-3 dB). At this location in the node this will normally be a minor drawback.

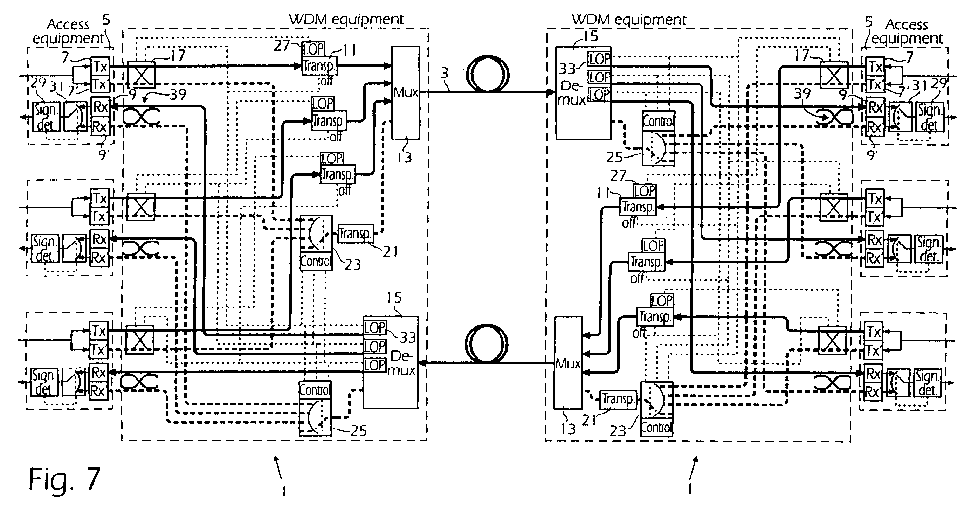

Another modification is illustrated in Fig. 7. in which each 2x2 cross-bar switch 19 connected directly to a pair of receivers 9 and 9' are replaced with four 1:2 50-50% fibre couplers 39 arranged in a fixed cross-bar function operating by power splitting, so that the output from the demultiplexer 15 always reaches both the ordinary receiver 9 and the standby receiver 9' and so that the output from the corresponding port of the 1:4 optical space switch 25 also reaches the two receivers 9. 9' in such a pair simultaneously. For a fault in an ordinary receiver 9, this will be detected by the signal detector 29 in the same access equipment 5 and then there will be an automatic change to the standby receiver 9' by changing the position of the electric switch 31. No more elements have to be switched. A drawback of this construction is an increased optical loss, about -6 dB. The advantage is that fewer electrical control lines are needed in the node.

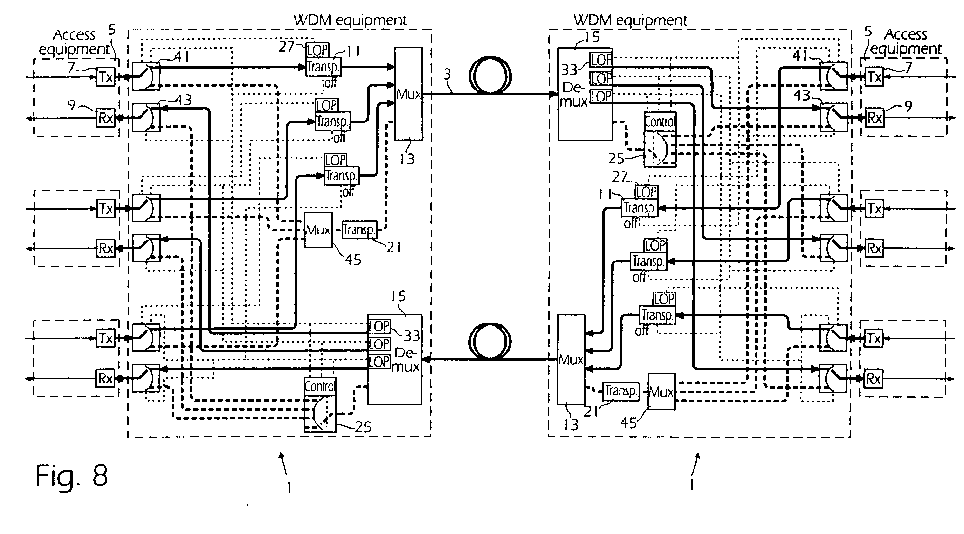

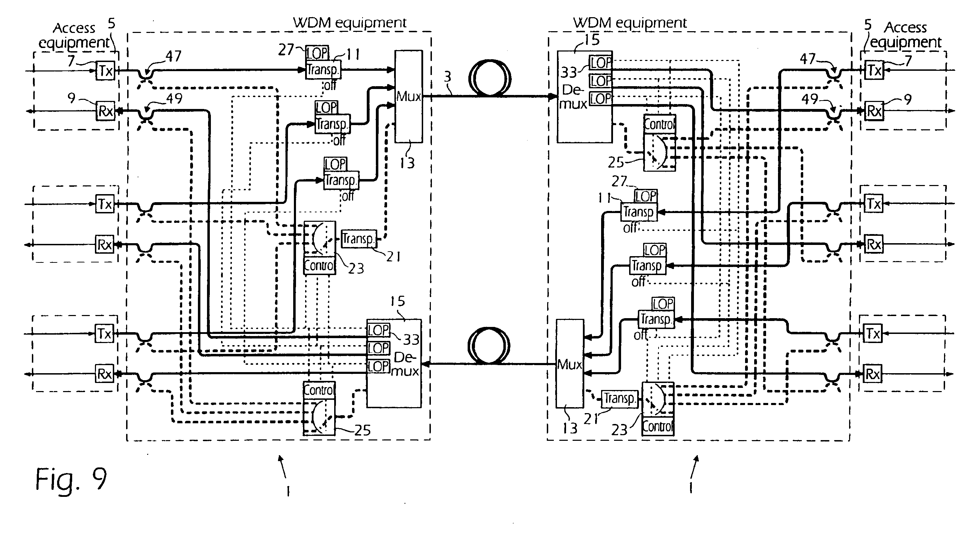

Another modification is that no spare transmitters 7' and/or spare receivers 9' are used. Then the respective cross-bar switches 17. 19 are replaced with simple 1:2 switches 41. 43. as illustrated by the node design shown in Fig. 8. Then also the 4:1 switch 23 can be replaced with a simpler element, a multiplexer 45 connected to the input of the spare transponder 21. Of course, the 4:1 switch 23 can be still included, as is the case of the node design illustrated in Fig. 9. Here all 2x2 cross-bar switches 17, 19 are instead replaced with 1:2 50/50% optical splitters 47, 49. so that the signal from a transmitter 7 always reaches the appropriate ordinary responder 11 and the respective input port of the 4:1 switch 23. In the case where an ordinary transponder 11 fails, this is detected as above and the 4:1 switch 23 is then set to the respective position, so that the standby transponders 21 will now carry the traffic.

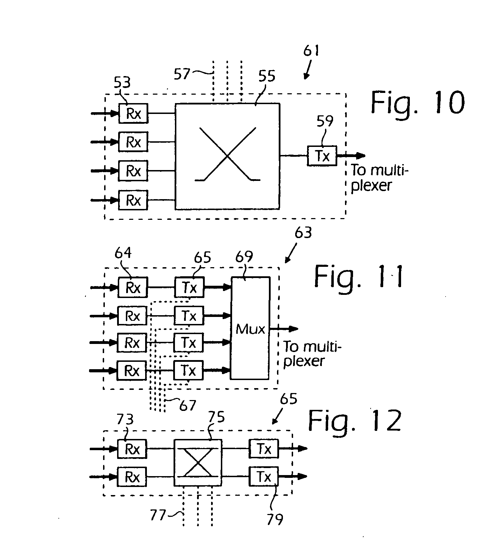

The optical space switches, i.e, the 1:2 switches 41, 43, the 2x2 cross-bar switches 17, 19 and in particular the 1:4 and 4:1 switches 23, 25 used in the node designs illustrated in Figs. 2 - 9 can be replaced with alternative switches constructed not entirely of optical elements. The reason for introducing such alternatives is that particularly large optical switch matrices are not considered reliable. In the 4:1 switch 51 illustrated in Fig. 10 receivers 53 are arranged on the input side converting the light signals to electrical signals, which are provided to an electrical switch 55, switching the selected input electrical signal to the output, as commanded by electric control signals on lines 57. The electric signal is converted to an optical signal by a transmitter 59 using the wavelength adapted to that of the spare transponder, which thus can be omitted. The switch 61 of Fig. 10 can thus be used to replace the switch 23 and the spare transponder 21 of for example Fig. 2.

Another possibility is to use back-to-back receivers and transmitters, as is illustrated in the 4:1 switch 63 of Fig. 11. An input light signal is thus received by a receiver 64, in which it is convened to an electric signal sent to an electrooptical transmitter 65. The transmitter 65 is controlled by an electrical signal on an appropriate control line 67 and when it is activated it will transmit a light signal using the wavelength of the spare transponder. The outputs of the transmitters are all connected to an optical multiplexer, the output of which is then connected to the optical fibre 3, so that the spare transponder can be omitted. The switch 63 illustrated in Fig. 11 can be used to replace the switch 23 and the spare transponder of for example Fig. 2.

A cross-bar switch 71 to used as a switch 17, 19 shown in Fig. 2 can be designed as is illustrated in Fig. 12. The two input optical terminals are connected to optoelectrical receivers 73, which convert the light signals to electrical signals. The electrical signals are provided to a switch matrix performing 75 the crass/bar function as controlled by a suitable electrical signal on a line 77- The two outputs of the electrical cross-bar switch 75 are connected to the inputs of electrooptical transmitters 79.

## Claims

1. An optical WDM network comprising at least two nodes (1) interconnected by a bidirectional optical link, each node comprising
- at least two pairs of ordinary optical transmitters (7) and ordinary optical receivers (9), each pair including an ordinary optical transmitter receiving electrical signals and converting the received electrical signals to issued first optical signals and an ordinary optical receiver receiving optical signals and converting them to electrical signals, and
- ordinary transponders (11), each ordinary transponder receiving the issued first optical signals from only one of the ordinary optical transmitters of the pairs and converting the received signals to issued second optical signals of a well defined wavelength band, the wavelength bands of the second optical signals issued by different ones of the ordinary transponders being separate from each other,
**characterized in that** each node further comprises
- a first optical multiplexer or combiner (13) connected to receive the second optical signals issued by the ordinary transponders of the node, the first optical multiplexer or combiner combining the second optical signals to issue a combined optical signal on an optical fiber (3) included in the bidirectional link interconnecting the node and another node, and
- a single spare transponder (21) connected to receive, for a failure of any of the ordinary transponders (11) of the node, the first optical signals, which are to be received by the ordinary transponder, and to convert the received first optical signals to issued third optical signals of a well defined wavelength band separate from the wavelength bands of the second optical signals issued by the ordinary transponders in the node, the spare transponder being connected to the first optical multiplexer or combiner (13) of the node to provide the third optical signals to the first optical multiplexer or combiner which combines the third optical signals issued by the spare transponder of the node with the second optical signals issued by the ordinary transponders of the node to issue a combined optical signal on the optical fiber (3).

2. A WDM network according to claim 1, **characterized in that** each node (1) further comprises first optical switches (1'7; 41), each first optical switch having an input and a first output and a second output, the input of the first optical switch being connected to one of the ordinary optical transmitters of the node and the first output being connected to that ordinary transponder (11) which is connected to receive the first optical signals issued by said one of the ordinary optical transmitters of the node to forward optical signals received on the input of the first optical switch to that ordinary transponder, and the second output being connected to the spare transponder (21) to forward optical signals received on the input of the first optical switch to the spare transponder, depending on a position of the first optical switch.

3. A WDM network according to claim 2, **characterized in that** each ordinary transponder (11) in a node (1) is provided with an input loss detector (27) controlling that first optical switch (17), the first output of which is connected to the ordinary transponder.

4. A WDM network according to claim 1, **characterized in that** each node (1) further comprises optical power splitters (35; 47), each optical power splitter having an input and a first output and a second output, the input of the optical power splitter being connected to one of the ordinary optical transmitters (7) of the node to receive signals issued by said one of the ordinary optical transmitters and the first output of the optical power splitter being connected to that ordinary transponder (11) which is connected to receive the first optical signals issued by said one of the ordinary transmitters to forward a first share of the optical signals received on the input to that ordinary transponder, and the second output of the optical power splitter being connected to forward a second share of the optical signals received on the input to the spare transponder (21) of the node.

5. A WDM network according to any of claims 1 - 4, **characterized in that** each node (1) further comprises a second optical multiplexer or combiner (45) having an output connected to an input of the spare transponder (21) and having inputs connected to the ordinary optical transmitters (7) of the node to receive the first optical signals issued by the ordinary optical transmitters and to forward the received first optical signals on the output of the second optical multiplexer or combiner to the spare transponder of the node.

6. A WDM network according to any of claims 2 - 4, **characterized in that** each node (1) further comprises a second optical switch (23) having one output and a plurality of inputs, one input of the second optical switch being arranged for and connected to each ordinary transponder (11), and the output of the second optical switch being connected to the input of the spare transponder (21), the second optical switch being arranged to connect one of its inputs to its output in order to forward the first optical signals issued by one of the ordinary optical transmitters (7) of the node to the spare transponder of the node.

7. A WDM network according to any of claims 1 - 6, **characterized in that** each node (1) further comprises spare optical transmitters (7'), one spare optical transmitter being arranged together with an ordinary optical transmitter (7) in a pair, the spare optical transmitter and the ordinary optical transmitter of a pair receiving the same electrical signals and converting the received electrical signals to optical signals and the spare optical transmitter being arranged to issue the optical signals to the other node, if the ordinary optical transmitter fails.

8. A WDM network according to claim 7, **characterized in that** each node (1) further comprises first optical switches (17), each first switch connected to an ordinary optical transmitter (7) and a spare optical transmitter (7') of a pair to forward optical signals from only one of the ordinary optical transmitter and the spare optical transmitter.

9. A WDM network according to claim 8, **characterized in that** each first optical switch (17) in a node (1) is arranged to connect, in a first position, the ordinary optical transmitter (7), to which it is connected, to the respective ordinary transponder (11) arranged for the optical transmitter, and to connect, in a second position of the first optical switch, the ordinary transmitter to the spare transponder (21).

10. A WDM network according to claim 9, **characterised in that** in the first position of one of the first optical switches (17) of a node (1) the spare optical transmitter (7') which is connected to said one of the first optical switches is connected through said one of the first optical switches to the spare transponder (21) through a second switch (23), the second switch allowing optical signals from at most one spare optical transmitter to reach the spare transponder.

11. A WDM network according to claim 10, **characterized in that** in the second position of one of the first optical switches (17) of a node (1) the ordinary optical transmitter (7) which is connected to said one of the first optical switches is connected through the first optical switch to the spare transponder (21) through the second switch (23), the second switch allowing optical signals from at most one ordinary optical transmitter (7) to reach the spare transponder.

12. A WDM network according to any of claims 9 - 11, **characterized in that** in the second position of one of the first optical switches (17) of a node (1) the spare optical transmitter (7') which is connected to said one of the first optical switches is connected to a respective ordinary transponder (11).

13. A WDM network according to any of claims 1 - 12, **characterized in that** all ordinary receivers (9) of a node (1) are connected to a single demultiplexer or filter (15).

14. A WDM network according to any of claims 1-12, **characterized in that** all ordinary receivers (9) of a node (1) are connected to a single demultiplexer or filter (15), a switch (25) being provided to conduct an optical signal from the demultiplexer or filter to at most one of the ordinary receivers, this optical signal being in the same wavelength band as the optical signals issued by the spare transponder (21).

15. A WDM network according to any of claims 1 - 14, **characterized in that** each node (1) further comprises spare optical receivers (9'), one spare optical receiver being arranged together with an ordinary optical receiver (9) in a pair, the spare optical receiver and the ordinary optical receiver of a pair converting received optical signals to electrical signals and being connected to output electrical signals to the same output terminal, so that the spare optical receiver delivers electrical signals to the output terminal, node, if the ordinary optical receiver cannot deliver electrical signals.

16. A WDM network according to claim 15, **characterized in that** all ordinary receivers (9) of a node (1) are connected to a single demultiplexer or filter (15), each spare receiver (9') being connected to the demultiplexer or filter through a switch (25), the switch having a plurality of outputs, each output being connected to a different one of the spare optical receivers, and the switch being arranged to forward a signal from the demultiplexer or filter to at most one of the spare optical receivers.

17. A WDM network according to claim 16, **characterized in that** a signal which is forwarded from the demultiplexer or filter (15) to one of the spare optical receivers (9') is in the same wavelength band as the optical signals issued by a spare transponder (21) of the node.

18. A WDM network according to claim 16, **characterized in that** a signal which is forwarded from the demultiplexer or filter (15) of a node (1) to one of the spare optical receivers (9') of the node (1) is in the same wavelength band as the optical signals issued by the ordinary transmitter (7) in the pair of an ordinary transmitter and that ordinary receiver (9), with which the spare receiver is included in a pair.

19. A node (1) for connection to another node by a bidirectional optical link in an optical WDM network, the node comprising
- at least two pairs of ordinary optical transmitters (7) and ordinary optical receivers (9), each pair including an ordinary optical transmitter receiving electrical signals and converting the received electrical signals to issued first optical signals and an ordinary optical receiver receiving optical signals and converting them to electrical signals, and
- ordinary transponders (11), each ordinary transponder receiving the issued first optical signals from only one of the ordinary optical transmitters of the pairs and converting the received signals to issued second optical signals of a well defined wavelength band, the wavelength bands of the second optical signals issued by different ones of the ordinary transponders being separate from each other,
**characterized by**
- a first optical multiplexer or combiner (13) connected to receive the second optical signals issued by the ordinary transponders, the first optical multiplexer or combiner combining the second optical signals to issue a combined optical signal on an optical fiber (3) included in a bidirectional link interconnecting the node and the other node, and
- a single spare transponder (21) connected to receive, for a failure of any of the ordinary transponders (11), the first optical signals, which are to be received by the ordinary transponder, and to convert the received first optical signals to issued third optical signals of a well defined wavelength band separate from the wavelength bands of the second optical signals issued by the ordinary transponders, the spare transponder being connected to the first optical multiplexer or combiner (13) to provide the third optical signals to the first optical multiplexer or combiner which combines the third optical signals issued by the spare transponder with the second optical signals issued by the ordinary transponders to issue a combined optical signal on the optical fiber (3).

20. A node according to claim 20, **characterized by** first optical switches (17; 41), each first optical switch having an input and a first output and a second output, the input of the first optical switch being connected to one of the ordinary optical transmitters and the first output being connected to that ordinary transponder (11) which is connected to receive the first optical signals issued by said one of the ordinary optical transmitters to forward optical signals received on the input of the first optical switch to that ordinary transponder, and the second output being connected to the spare transponder (21) to forward optical signals received on the input of the first optical switch to the spare transponder, depending on a position of the first optical switch.

21. A node according to claim 20, **characterised in that** each ordinary transponder (11) is provided with an input loss detector (27) controlling that first optical switch (17), the first output of which is connected to the ordinary transponder.

22. A node according to claim 19, **characterized by** optical power splitters (35; 47), each optical power splitter having an input and a first output and a second output, the input of the optical power splitter being connected to one of the ordinary optical transmitters (7) to receive signals issued by said one of the ordinary optical transmitters and the first output of the optical power splitter being connected to that ordinary transponder (11) which is connected to receive the first optical signals issued by said one of the ordinary transmitters to forward a first share of the optical signals received on the input to that ordinary transponder, and the second output of the optical power splitter being connected to forward a second share of the optical signals received on the input to the spare transponder (21).

23. A node according to any of claims 19-22, **characterized by** a second optical multiplexer or combiner (45) having an output connected to an input of the spare transponder (21) and having inputs connected to the ordinary optical transmitters (7) to receive the first optical signals issued by the ordinary optical transmitters and to forward the received first optical signals on the output of the second optical multiplexer or combiner to the spare transponder.

24. A node according to any of claims 19 - 22, **characterized by** a second optical switch (23) having one output and a plurality of inputs, one input of the second optical switch being arranged for and connected to each ordinary transponder (11), and the output of the second optical switch being connected to the input of the spare transponder (21), the second optical switch being arranged to connect one of its inputs to its output in order to forward the first optical signals issued by one of the ordinary optical transmitters (7) to the spare transponder.

25. A node according to any of claims 19 - 24, **characterized by** spare optical transmitters (T), one spare optical transmitter being arranged together with an ordinary optical transmitter (7) in a pair, the spare optical transmitter and the ordinary optical transmitter of a pair receiving the same electrical signals and converting the received electrical signals to optical signals and the spare optical transmitter being arranged to issue the optical signals to the other node, if the ordinary optical transmitter fails.

26. A node according to claim 25, **characterized by** first optical switches (17), each first switch connected to an ordinary optical transmitter (7) and a spare optical transmitter (7') of a pair to forward optical signals from only one of the ordinary optical transmitter and the spare optical transmitter.

27. A node according to claim 26, **characterized in that** each first optical switch (17) is arranged to connect, in a first position, the ordinary optical transmitter (7), to which it is connected, to the respective ordinary transponder (11) arranged for the optical transmitter, and to connect, in a second position of the first optical switch, the ordinary transmitter to the spare transponder (21).

28. A node according to claim 27, **characterized in that** in the first position of one of the first optical switches (17) the spare optical transmitter (7') which is connected to said one of the first optical switches is connected through said one of the first optical switches to the spare transponder (21) through a second switch (23), the second switch allowing optical signals from at most one spare optical transmitter to reach the spare transponder.

29. A node according to claim 28, **characterized in that** in the second position of one of the first optical switches (17) the ordinary optical transmitter (7) which is connected to said one of the first optical switches is connected through the first optical switch to the spare transponder (21) through the second switch (23), the second switch allowing optical signals from at most one ordinary optical transmitter (7) to reach the spare transponder.

30. A node according to any of claims 27 - 29, **characterized in that** in the second position of one of the first optical switches (17) the spare optical transmitter (7') which is connected to said one of the first optical switches is connected to a respective ordinary transponder (11).

31. A node according to any of claims 19 - 30, **characterized in that** all ordinary receivers (9) are connected to a single demultiplexer or filter (15).

32. A node according to any of claims 19 - 31, **characterized in that** all ordinary receivers (9) are connected to a single demultiplexer or filter (15), a switch (25) being provided to conduct an optical signal from the demultiplexer or filter to at most one of the ordinary receivers, this optical signal being in the same wavelength band as the optical signals issued by the spare transponder (21).

33. A node according to any of claims 19 - 32, **characterized by** spare optical receivers (9'), one spare optical receiver being arranged together with an ordinary optical receiver (9) in a pair, the spare optical receiver and the ordinary optical receiver of a pair converting received optical signals to electrical signals and being connected to output electrical signals to the same output terminal, so that the spare optical receiver delivers electrical signals to the output terminal, if the ordinary optical receiver cannot deliver electrical signals.

34. A node according to claim 33, **characterized in that** all ordinary receivers (9) are connected to a single demultiplexer or filter (15), each spare receiver (9') being connected to the demultiplexer or filter through a switch (25), the switch having a plurality of outputs, each output being connected to a different one of the spare optical receivers, and the switch being arranged to forward a signal from the demultiplexer or filter to at most one of the spare optical receivers.

35. A node according to claim 34, **characterized in that** a signal which is forwarded from the demultiplexer or filter (15) to one of the spare optical receivers (9') is in the same wavelength band as the optical signals issued by a spare transponder (21).

36. A node according to claim 34, **characterized in that** a signal which is forwarded from the demultiplexer or filter (15) to one of the spare optical receivers (9') is in the same wavelength band as the optical signals issued by the ordinary transmitter (7) in the pair of an ordinary transmitter and that ordinary receiver (9), with which the spare receiver is included in a pair.

## Patentansprüche

1. Optisches WDM-Netz, das mindestens zwei Knoten (1), die durch eine bidirektionale optische Verbindung miteinander verbunden sind, aufweist, wobei jeder Knoten folgende Merkmale aufweist:
- mindestens zwei Paare von gewöhnlichen optischen Sendern (7) und gewöhnlichen optischen Empfängern (9), wobei jedes Paar einen gewöhnlichen optischen Sender, der elektrische Signale empfängt und die empfangenen elektrischen Signale in ausgegebene erste optische Signale umwandelt, und einen gewöhnlichen optischen Empfänger, der optische Signale empfängt und dieselben in elektrische Signale umwandelt, umfasst, und
- gewöhnliche Transponder (11), wobei jeder gewöhnliche Transponder die ausgegebenen ersten optischen Signale von lediglich einem der gewöhnlichen optischen Sender der Paare empfängt und die empfangenen Signale in ausgegebene zweite optische Signale eines genau definierten Wellenlängenbands umwandelt, wobei die Wellenlängenbänder der zweiten optischen Signale, die durch unterschiedliche der gewöhnlichen Transponder ausgegeben werden, voneinander getrennt sind,
**dadurch gekennzeichnet, dass** jeder Knoten ferner folgende Merkmale aufweist:
- einen ersten optischen Multiplexer oder Combiner (13), der verbunden ist, um die zweiten optischen Signale, die durch die gewöhnlichen Transponder des Knotens ausgegeben werden, zu empfangen, wobei der erste optische Multiplexer oder Combiner die zweiten optischen Signale kombiniert, um in einer optischen Faser (3), die in der bidirektionalen Verbindung, die den Knoten und einen anderen Knoten miteinander verbindet, umfasst ist, ein kombiniertes optisches Signal auszugeben, und
- einen einzelnen Ersatztransponder (21), der verbunden ist, um bei einem Ausfall von einem der gewöhnlichen Transponder (11) des Knotens die ersten optischen Signale, die durch den gewöhnlichen Transponder zu empfangen sind, zu empfangen und die empfangenen ersten optischen Signale in ausgegebene dritte optische Signale eines genau definierten Wellenlängenbands, das von den Wellenlängenbändern der zweiten optischen Signale, die durch die gewöhnlichen Transponder in dem Knoten ausgegeben werden, getrennt ist, umzuwandeln, wobei der Ersatztransponder mit dem ersten optischen Multiplexer oder Combiner (13) des Knotens verbunden ist, um die dritten optischen Signale zu dem ersten optischen Multiplexer oder Combiner, der die dritten optischen Signale, die durch den Ersatztransponder des Knotens ausgegeben werden, mit den zweiten optischen Signalen, die durch die gewöhnlichen Transponder des Knotens ausgegeben werden, kombiniert, um in der optischen Faser (3) ein kombiniertes optisches Signal auszugeben, zu liefern.

2. WDM-Netz nach Anspruch 1, **dadurch gekennzeichnet, dass** jeder Knoten (1) ferner erste optische Schalter (17; 41) aufweist, wobei jeder erste optische Schalter einen Eingang und einen ersten Ausgang und einen zweiten Ausgang hat, wobei der Eingang des ersten optischen Schalters mit einem der gewöhnlichen optischen Sender des Knotens verbunden ist und der erste Ausgang mit jenem gewöhnlichen Transponder (11), der verbunden ist, um die ersten optischen Signale, die durch den einen der gewöhnlichen optischen Sender des Knotens ausgegeben werden, zu empfangen, verbunden ist, um optische Signale, die an dem Eingang des ersten optischen Schalters empfangen werden, zu diesem gewöhnlichen Transponder weiterzuleiten, und der zweite Ausgang mit dem Ersatztransponder (21) verbunden ist, um optische Signale, die an dem Eingang des ersten optischen Schalters empfangen werden, abhängig von einer Position des ersten optischen Schalters zu dem Ersatztransponder weiterzuleiten.

3. WDM-Netz nach Anspruch 2, **dadurch gekennzeichnet, dass** jeder gewöhnliche Transponder (11) in einem Knoten (1) mit einem Eingangsverlustdetektor (27), der jenen ersten optischen Schalter (17), dessen erster Ausgang mit dem gewöhnlichen Transponder verbunden ist, steuert, versehen ist.

4. WDM-Netz nach Anspruch 1, **dadurch gekennzeichnet, dass** jeder Knoten (1) ferner optische Leistungsteiler (35; 47) aufweist, wobei jeder optische Leistungsteiler einen Eingang und einen ersten Ausgang und einen zweiten Ausgang hat, wobei der Eingang des optischen Leistungsteilers mit einem der gewöhnlichen optischen Sender (7) des Knotens verbunden ist, um Signale, die durch den einen der gewöhnlichen optischen Sender ausgegeben werden, zu empfangen, und der erste Ausgang des optischen Leistungsteilers mit jenem gewöhnlichen Transponder (11), der verbunden ist, um die ersten optischen Signale, die durch den einen der gewöhnlichen Sender ausgegeben werden, zu empfangen, verbunden ist, um einen ersten Anteil der optischen Signale, die an dem Eingang empfangen werden, zu diesem gewöhnlichen Transponder weiterzuleiten, und der zweite Ausgang des optischen Leistungsteilers verbunden ist, um einen zweiten Anteil der optischen Signale, die an dem Eingang empfangen werden, zu dem Ersatztransponder (21) des Knotens weiterzuleiten.

5. WDM-Netz nach einem der Ansprüche 1-4, **dadurch gekennzeichnet, dass** jeder Knoten (1) ferner einen zweiten optischen Multiplexer oder Combiner (45) mit einem Ausgang, der mit einem Eingang des Ersatztransponders (21) verbunden ist, und mit Eingängen, die mit den gewöhnlichen optischen Sendern (7) des Knotens verbunden sind, um die ersten optischen Signale, die durch die gewöhnlichen optischen Sender ausgegeben werden, zu empfangen, und die empfangenen ersten optischen Signale an dem Ausgang des zweiten optischen Multiplexers oder Combiners zu dem Ersatztransponder des Knotens weiterzuleiten, aufweist.

6. WDM-Netz nach einem der Ansprüche 2-4, **dadurch gekennzeichnet, dass** jeder Knoten (1) ferner einen zweiten optischen Schalter (23) mit einem Ausgang und einer Mehrzahl von Eingängen aufweist, wobei für jeden gewöhnlichen Transponder (11) ein Eingang des zweiten optischen Schalters angeordnet und mit demselben verbunden ist, und der Ausgang des zweiten optischen Schalters mit dem Eingang des Ersatztransponders (21) verbunden ist, wobei der zweite optische Schalter angeordnet ist, um einen der Eingänge desselben mit dem Ausgang desselben zu verbinden, um die ersten optischen Signale, die durch einen der gewöhnlichen optischen Sender (7) des Knotens ausgegeben werden, zu dem Ersatztransponder des Knotens weiterzuleiten.

7. WDM-Netz nach einem der Ansprüche 1-6, **dadurch gekennzeichnet, dass** jeder Knoten (1) ferner optische Ersatzsender (7') aufweist, wobei ein optischer Ersatzsender zusammen mit einem gewöhnlichen optischen Sender (7) in einem Paar angeordnet ist, wobei der optische Ersatzsender und der gewöhnliche optische Sender eines Paars die gleichen elektrischen Signale empfangen und die empfangenen elektrischen Signale in optische Signale umwandeln und der optische Ersatzsender angeordnet ist, um die optischen Signale zu dem anderen Knoten auszugeben, wenn der gewöhnliche optische Sender ausfällt.

8. WDM-Netz nach Anspruch 7, **dadurch gekennzeichnet, dass** jeder Knoten (1) ferner erste optische Schalter (17) aufweist, wobei jeder erste Schalter mit einem gewöhnlichen optischen Sender (7) und einem optischen Ersatzsender (7') eines Paars verbunden ist, um optische Signale von lediglich entweder dem gewöhnlichen optischen Sender oder dem optischen Ersatzsender weiterzuleiten.

9. WDM-Netz nach Anspruch 8, **dadurch gekennzeichnet, dass** jeder erste optische Schalter (17) in einem Knoten (1) angeordnet ist, um in einer ersten Position den gewöhnlichen optischen Sender (7), mit dem derselbe verbunden ist, mit dem jeweiligen gewöhnlichen Transponder (11), der für den optischen Sender angeordnet ist, zu verbinden und in einer zweiten Position des ersten optischen Schalters den gewöhnlichen Sender mit dem Ersatztransponder (21) zu verbinden.

10. WDM-Netz nach Anspruch 9, **dadurch gekennzeichnet, dass** in der ersten Position von einem der ersten optischen Schalter (17) eines Knotens (1) der optische Ersatzsender (7'), der mit dem einen der ersten optischen Schalter verbunden ist, durch den einen der ersten optischen Schalter durch einen zweiten Schalter (23) mit dem Ersatztransponder (21) verbunden ist, wobei es der zweite Schalter optischen Signalen von höchstens einem optischen Ersatzsender ermöglicht, den Ersatztransponder zu erreichen.

11. WDM-Netz nach Anspruch 10, **dadurch gekennzeichnet, dass** in der zweiten Position von einem der ersten optischen Schalter (17) eines Knotens (1) der gewöhnliche optische Sender (7), der mit dem einen der ersten optischen Schalter verbunden ist, durch den ersten optischen Schalter durch den zweiten Schalter (23) mit dem Ersatztransponder (21) verbunden ist, wobei es der zweite Schalter optischen Signalen von höchstens einem gewöhnlichen optischen Sender (7) ermöglicht, den Ersatztransponder zu erreichen.

12. WDM-Netz nach einem der Ansprüche 9-11, **dadurch gekennzeichnet, dass** in der zweiten Position von einem der ersten optischen Schalter (17) eines Knotens (1) der optische Ersatzsender (7'), der mit dem einen der ersten optischen Schalter verbunden ist, mit einem jeweiligen gewöhnlichen Transponder (11) verbunden ist.

13. WDM-Netz nach einem der Ansprüche 1-12, **dadurch gekennzeichnet, dass** alle gewöhnlichen Empfänger (9) eines Knotens (1) mit einem einzelnen Demultiplexer oder Filter (15) verbunden sind.

14. WDM-Netz nach einem der Ansprüche 1-12, **dadurch gekennzeichnet, dass** alle gewöhnlichen Empfänger (9) eines Knotens (1) mit einem einzelnen Demultiplexer oder Filter (15) verbunden sind, wobei ein Schalter (25) vorgesehen ist, um ein optisches Signal von dem Demultiplexer oder Filter zu höchstens einem der gewöhnlichen Empfänger zu leiten, wobei dieses optische Signal in dem gleichen Wellenlängenband liegt wie die optischen Signale, die durch den Ersatztransponder (21) ausgegeben werden.

15. WDM-Netz nach einem der Ansprüche 1-14, **dadurch gekennzeichnet, dass** jeder Knoten (1) ferner optische Ersatzempfänger (9') aufweist, wobei ein optischer Ersatzempfänger zusammen mit einem gewöhnlichen optischen Empfänger (9) in einem Paar angeordnet ist, wobei der optische Ersatzempfänger und der gewöhnliche optische Empfänger eines Paars empfangene optische Signale in elektrische Signale umwandeln und verbunden sind, um elektrische Signale zu demselben Ausgangsanschluss auszugeben, so dass der optische Ersatzempfänger elektrische Signale zu dem Ausgangsanschluss befördert, wenn der gewöhnliche optische Empfänger keine elektrischen Signale befördern kann.

16. WDM-Netz nach Anspruch 15, **dadurch gekennzeichnet, dass** alle gewöhnlichen Empfänger (9) eines Knotens (1) mit einem einzelnen Demultiplexer oder Filter (15) verbunden sind, wobei jeder Ersatzempfänger (9') durch einen Schalter (25) mit dem Demultiplexer oder Filter verbunden ist, wobei der Schalter eine Mehrzahl von Ausgängen hat, wobei jeder Ausgang mit einem anderen der optischen Ersatzempfänger verbunden ist und der Schalter angeordnet ist, um ein Signal von dem Demultiplexer oder Filter zu höchstens einem der optischen Ersatzempfänger weiterzuleiten.

17. WDM-Netz nach Anspruch 16, **dadurch gekennzeichnet, dass** ein Signal, das von dem Demultiplexer oder Filter (15) zu einem der optischen Ersatzempfänger (9') weitergeleitet wird, in dem gleichen Wellenlängenband liegt wie die optischen Signale, die durch einen Ersatztransponder (21) des Knotens ausgegeben werden.

18. WDM-Netz nach Anspruch 16, **dadurch gekennzeichnet, dass** ein Signal, das von dem Demultiplexer oder Filter (15) eines Knotens (1) zu einem der optischen Ersatzempfänger (9') des Knotens (1) weitergeleitet wird, in dem gleichen Wellenlängenband liegt wie die optischen Signale, die durch den gewöhnlichen Sender (7) in dem Paar eines gewöhnlichen Senders und jenes gewöhnlichen Empfängers (9), mit dem der Ersatzempfänger in einem Paar umfasst ist, ausgegeben werden.

19. Knoten (1) für eine Verbindung mit einem anderen Knoten durch eine bidirektionale optische Verbindung in einem optischen WDM-Netz, wobei der Knoten folgende Merkmale aufweist:
- mindestens zwei Paare von gewöhnlichen optischen Sendern (7) und gewöhnlichen optischen Empfängern (9), wobei jedes Paar einen gewöhnlichen optischen Sender, der elektrische Signale empfängt und die empfangenen elektrischen Signale in ausgegebene erste optische Signale umwandelt, und einen gewöhnlichen optischen Empfänger, der optische Signale empfängt und dieselben in elektrische Signale umwandelt, umfasst, und
- gewöhnliche Transponder (11), wobei jeder gewöhnliche Transponder die ausgegebenen ersten optischen Signale von lediglich einem der gewöhnlichen optischen Sender der Paare empfängt und die empfangenen Signale in ausgegebene zweite optische Signale eines genau definierten Wellenlängenbands umwandelt, wobei die Wellenlängenbänder der zweiten optischen Signale, die durch unterschiedliche der gewöhnlichen Transponder ausgegeben werden, voneinander getrennt sind,
**gekennzeichnet durch**
- einen ersten optischen Multiplexer oder Combiner (13), der verbunden ist, um die zweiten optischen Signale, die **durch** die gewöhnlichen Transponder ausgegeben werden, zu empfangen, wobei der erste optische Multiplexer oder Combiner die zweiten optischen Signale kombiniert, um in einer optischen Faser (3), die in einer bidirektionalen Verbindung, die den Knoten und den anderen Knoten miteinander verbindet, umfasst ist, ein kombiniertes optisches Signal auszugeben, und
- einen einzelnen Ersatztransponder (21), der verbunden ist, um bei einem Ausfall von einem der gewöhnlichen Transponder (11) die ersten optischen Signale, die **durch** den gewöhnlichen Transponder zu empfangen sind, zu empfangen und die empfangenen ersten optischen Signale in ausgegebene dritte optische Signale eines genau definierten Wellenlängenbands, das von den Wellenlängenbändern der zweiten optischen Signale, die **durch** die gewöhnlichen Transponder ausgegeben werden, getrennt ist, umzuwandeln, wobei der Ersatztransponder mit dem ersten optischen Multiplexer oder Combiner (13) verbunden ist, um die dritten optischen Signale zu dem ersten optischen Multiplexer oder Combiner, der die dritten optischen Signale, die **durch** den Ersatztransponder ausgegeben werden, mit den zweiten optischen Signalen, die **durch** die gewöhnlichen Transponder ausgegeben werden, kombiniert, um in der optischen Faser (3) ein kombiniertes optisches Signal auszugeben, zu liefern.

20. Knoten nach Anspruch 19, **gekennzeichnet durch** erste optische Schalter (17; 41), wobei jeder erste optische Schalter einen Eingang und einen ersten Ausgang und einen zweiten Ausgang hat, wobei der Eingang des ersten optischen Schalters mit einem der gewöhnlichen optischen Sender verbunden ist und der erste Ausgang mit jenem gewöhnlichen Transponder (11), der verbunden ist, um die ersten optischen Signale, die **durch** den einen der gewöhnlichen optischen Sender ausgegeben werden, zu empfangen, verbunden ist, um optische Signale, die an dem Eingang des ersten optischen Schalters empfangen werden, zu diesem gewöhnlichen Transponder weiterzuleiten, und der zweite Ausgang mit dem Ersatztransponder (21) verbunden ist, um optische Signale, die an dem Eingang des ersten optischen Schalters empfangen werden, abhängig von einer Position des ersten optischen Schalters zu dem Ersatztransponder weiterzuleiten.

21. Knoten nach Anspruch 20, **dadurch gekennzeichnet, dass** jeder gewöhnliche Transponder (11) mit einem Eingangsverlustdetektor (27), der jenen ersten optischen Schalter (17), dessen erster Ausgang mit dem gewöhnlichen Transponder verbunden ist, steuert, versehen ist.

22. Knoten nach Anspruch 19, **gekennzeichnet durch** optische Leistungsteiler (35; 47), wobei jeder optische Leistungsteiler einen Eingang und einen ersten Ausgang und einen zweiten Ausgang hat, wobei der Eingang des optischen Leistungsteilers mit einem der gewöhnlichen optischen Sender (7) verbunden ist, um Signale, die durch den einen der gewöhnlichen optischen Sender ausgegeben werden, zu empfangen, und der erste Ausgang des optischen Leistungsteilers mit jenem gewöhnlichen Transponder (11), der verbunden ist, um die ersten optischen Signale, die **durch** den einen der gewöhnlichen Sender ausgegeben werden, zu empfangen, verbunden ist, um einen ersten Anteil der optischen Signale, die an dem Eingang empfangen werden, zu diesem gewöhnlichen Transponder weiterzuleiten, und der zweite Ausgang des optischen Leistungsteilers verbunden ist, um einen zweiten Anteil der optischen Signale, die an dem Eingang empfangen werden, zu dem Ersatztransponder (21) weiterzuleiten.

23. Knoten nach einem der Ansprüche 19-22, **gekennzeichnet durch** einen zweiten optischen Multiplexer oder Combiner (45) mit einem Ausgang, der mit einem Eingang des Ersatztransponders (21) verbunden ist, und mit Eingängen, die mit den gewöhnlichen optischen Sendern (7) verbunden sind, um die ersten optischen Signale, die **durch** die gewöhnlichen optischen Sender ausgegeben werden, zu empfangen, und die empfangenen ersten optischen Signale an dem Ausgang des zweiten optischen Multiplexers oder Combiners zu dem Ersatztransponder weiterzuleiten.

24. Knoten nach einem der Ansprüche 19-22, **gekennzeichnet durch** einen zweiten optischen Schalter (23) mit einem Ausgang und einer Mehrzahl von Eingängen, wobei für jeden gewöhnlichen Transponder (11) ein Eingang des zweiten optischen Schalters angeordnet und mit demselben verbunden ist, und der Ausgang des zweiten optischen Schalters mit dem Eingang des Ersatztransponders (21) verbunden ist, wobei der zweite optische Schalter angeordnet ist, um einen der Eingänge desselben mit dem Ausgang desselben zu verbinden, um die ersten optischen Signale, die **durch** einen der gewöhnlichen optischen Sender (7) ausgegeben werden, zu dem Ersatztransponder weiterzuleiten.

25. Knoten nach einem der Ansprüche 19-24, **gekennzeichnet durch** optische Ersatzsender (7'), wobei ein optischer Ersatzsender zusammen mit einem gewöhnlichen optischen Sender (7) in einem Paar angeordnet ist, wobei der optische Ersatzsender und der gewöhnliche optische Sender eines Paars die gleichen elektrischen Signale empfangen und die empfangenen elektrischen Signale in optische Signale umwandeln und der optische Ersatzsender angeordnet ist, um die optischen Signale zu dem anderen Knoten auszugeben, wenn der gewöhnliche optische Sender ausfällt.

26. Knoten nach Anspruch 25, **gekennzeichnet durch** erste optische Schalter (17), wobei jeder erste Schalter mit einem gewöhnlichen optischen Sender (7) und einem optischen Ersatzsender (7') eines Paars verbunden ist, um optische Signale von lediglich entweder dem gewöhnlichen optischen Sender oder dem optischen Ersatzsender weiterzuleiten.

27. Knoten nach Anspruch 26, **dadurch gekennzeichnet, dass** jeder erste optische Schalter (17) angeordnet ist, um in einer ersten Position den gewöhnlichen optischen Sender (7), mit dem derselbe verbunden ist, mit dem jeweiligen gewöhnlichen Transponder (11), der für den optischen Sender angeordnet ist, zu verbinden und in einer zweiten Position des ersten optischen Schalters den gewöhnlichen Sender mit dem Ersatztransponder (21) zu verbinden.

28. Knoten nach Anspruch 27, **dadurch gekennzeichnet, dass** in der ersten Position von einem der ersten optischen Schalter (17) der optische Ersatzsender (7'), der mit dem einen der ersten optischen Schalter verbunden ist, durch den einen der ersten optischen Schalter durch einen zweiten Schalter (23) mit dem Ersatztransponder (21) verbunden ist, wobei es der zweite Schalter optischen Signalen von höchstens einem optischen Ersatzsender ermöglicht, den Ersatztransponder zu erreichen.

29. Knoten nach Anspruch 28, **dadurch gekennzeichnet, dass** in der zweiten Position von einem der ersten optischen Schalter (17) der gewöhnliche optische Sender (7), der mit dem einen der ersten optischen Schalter verbunden ist, durch den ersten optischen Schalter durch den zweiten Schalter (23) mit dem Ersatztransponder (21) verbunden ist, wobei es der zweite Schalter optischen Signalen von höchstens einem gewöhnlichen optischen Sender (7) ermöglicht, den Ersatztransponder zu erreichen.

30. Knoten nach einem der Ansprüche 27-29, **dadurch gekennzeichnet, dass** in der zweiten Position von einem der ersten optischen Schalter (17) der optische Ersatzsender (7'), der mit dem einen der ersten optischen Schalter verbunden ist, mit einem jeweiligen gewöhnlichen Transponder (11) verbunden ist.

31. Knoten nach einem der Ansprüche 19-30, **dadurch gekennzeichnet, dass** alle gewöhnlichen Empfänger (9) mit einem einzelnen Demultiplexer oder Filter (15) verbunden sind.

32. Knoten nach einem der Ansprüche 19-31, **dadurch gekennzeichnet, dass** alle gewöhnlichen Empfänger (9) mit einem einzelnen Demultiplexer oder Filter (15) verbunden sind, wobei ein Schalter (25) vorgesehen ist, um ein optisches Signal von dem Demultiplexer oder Filter zu höchstens einem der gewöhnlichen Empfänger zu leiten, wobei dieses optische Signal in dem gleichen Wellenlängenband liegt wie die optischen Signale, die durch den Ersatztransponder (21) ausgegeben werden.

33. Knoten nach einem der Ansprüche 19-32, **gekennzeichnet durch** optische Ersatzempfänger (9'), wobei ein optischer Ersatzempfänger zusammen mit einem gewöhnlichen optischen Empfänger (9) in einem Paar angeordnet ist, wobei der optische Ersatzempfänger und der gewöhnliche optische Empfänger eines Paars empfangene optische Signale in elektrische Signale umwandeln und verbunden sind, um elektrische Signale zu demselben Ausgangsanschluss auszugeben, so dass der optische Ersatzempfänger elektrische Signale zu dem Ausgangsanschluss befördert, wenn der gewöhnliche optische Empfänger keine elektrischen Signale befördern kann.

34. Knoten nach Anspruch 33, **dadurch gekennzeichnet, dass** alle gewöhnlichen Empfänger (9) mit einem einzelnen Demultiplexer oder Filter (15) verbunden sind, wobei jeder Ersatzempfänger (9') durch einen Schalter (25) mit dem Demultiplexer oder Filter verbunden ist, wobei der Schalter eine Mehrzahl von Ausgängen hat, wobei jeder Ausgang mit einem anderen der optischen Ersatzempfänger verbunden ist und der Schalter angeordnet ist, um ein Signal von dem Demultiplexer oder Filter zu höchstens einem der optischen Ersatzempfänger weiterzuleiten.

35. Knoten nach Anspruch 34, **dadurch gekennzeichnet, dass** ein Signal, das von dem Demultiplexer oder Filter (15) zu einem der optischen Ersatzempfänger (9') weitergeleitet wird, in dem gleichen Wellenlängenband liegt wie die optischen Signale, die durch einen Ersatztransponder (21) ausgegeben werden.

36. Knoten nach Anspruch 34, **dadurch gekennzeichnet, dass** ein Signal, das von dem Demultiplexer oder Filter (15) zu einem der optischen Ersatzempfänger (9') weitergeleitet wird, in dem gleichen Wellenlängenband liegt wie die optischen Signale, die durch den gewöhnlichen Sender (7) in dem Paar eines gewöhnlichen Senders und jenes gewöhnlichen Empfängers (9), mit dem der Ersatzempfänger in einem Paar umfasst ist, ausgegeben werden.

## Revendications

1. Réseau à multiplexage par répartition en longueur d'onde (WDM) optique comprenant au moins deux noeuds (1) interconnectés par une liaison optique bidirectionnelle, chaque noeud comprenant
- au moins deux paires d'émetteurs optiques ordinaires (7) et de récepteurs optiques ordinaires (9), chaque paire incluant un émetteur optique ordinaire recevant des signaux électriques et convertissant les signaux électriques reçus en premiers signaux optiques émis, et un récepteur optique ordinaire recevant des signaux optiques et les convertissant en signaux électriques, et
- des transpondeurs ordinaires (11), chaque transpondeur ordinaire recevant les premiers signaux optiques émis provenant d'un seul des émetteurs optiques ordinaires des paires, et convertissant les signaux reçus en deuxièmes signaux optiques émis d'une bande de longueurs d'onde bien définie, les bandes de longueurs d'onde des deuxièmes signaux optiques émis par différents transpondeurs parmi les transpondeurs ordinaires étant séparées les unes des autres,
**caractérisé en ce que** chaque noeud comprend en outre
- un premier multiplexeur ou élément de combinaison optique (13) connecté pour recevoir les deuxièmes signaux optiques émis par les transpondeurs ordinaires du noeud, le premier multiplexeur ou élément de combinaison optique combinant les deuxièmes signaux optiques pour émettre un signal optique combiné sur une fibre optique (3) incluse dans la liaison bidirectionnelle interconnectant le noeud et un autre noeud, et
- un seul transpondeur en réserve (21) connecté pour recevoir, en cas de défaillance de l'un quelconque des transpondeurs ordinaires (11) du noeud, les premiers signaux optiques qui doivent être reçus par le transpondeur ordinaire, et pour convertir les premiers signaux optiques reçus en troisièmes signaux optiques émis, d'une bande de longueurs d'onde bien définie, séparée des bandes de longueurs d'onde des deuxièmes signaux optiques émis par les transpondeurs ordinaires dans le noeud, le transpondeur en réserve étant connecté au premier multiplexeur ou élément de combinaison optique (13) du noeud pour fournir les troisièmes signaux optiques au premier multiplexeur ou élément de combinaison optique qui combine les troisièmes signaux optiques émis par le transpondeur en réserve du noeud avec les deuxièmes signaux optiques émis par les transpondeurs ordinaires du noeud, pour émettre un signal optique combiné sur la fibre optique (3).

2. Réseau à multiplexage par répartition en longueur d'onde (WDM) selon la revendication 1, **caractérisé en ce que** chaque noeud (1) comprend en outre des premiers commutateurs optiques (17 ; 41), chaque premier commutateur optique ayant une entrée et une première sortie et une deuxième sortie, l'entrée du premier commutateur optique étant connectée à un des émetteurs optiques ordinaires du noeud et la première sortie étant connectée au transpondeur ordinaire (11) qui est connecté de façon à recevoir les premiers signaux optiques émis par ledit émetteur parmi les émetteurs optiques ordinaires du noeud, pour diriger vers ce transpondeur ordinaire les signaux optiques reçus sur l'entrée du premier commutateur optique, et la deuxième sortie étant connectée au transpondeur en réserve (21) pour diriger vers le transpondeur en réserve des signaux optiques reçus sur l'entrée du premier commutateur optique, en fonction d'une position du premier commutateur optique.

3. Réseau à multiplexage par répartition en longueur d'onde selon la revendication 2, **caractérisé en ce que** chaque transpondeur ordinaire (11) dans un noeud (1) est muni d'un détecteur de perte d'entrée (27) commandant le premier commutateur optique (17), dont la première sortie est connectée au transpondeur ordinaire.

4. Réseau à multiplexage par répartition en longueur d'onde selon la revendication 1, **caractérisé en ce que** chaque noeud (1) comprend en outre des diviseurs de puissance optiques (35 ; 47), chaque diviseur de puissance optique ayant une entrée et une première sortie et une deuxième sortie, l'entrée du diviseur de puissance optique étant connectée à l'un des émetteurs optiques ordinaires (7) du noeud, pour recevoir des signaux émis par ledit émetteur parmi les émetteurs optiques ordinaires, et la première sortie du diviseur de puissance optique étant connectée au transpondeur ordinaire (11) qui est connecté pour recevoir les premiers signaux optiques émis par ledit émetteur parmi les émetteurs ordinaires, pour diriger vers ce transpondeur ordinaire une première fraction des signaux optiques reçus sur l'entrée, et la deuxième sortie du diviseur de puissance optique étant connectée pour diriger vers le transpondeur en réserve (21) du noeud une deuxième fraction des signaux optiques reçus sur l'entrée.

5. Réseau à multiplexage par répartition en longueur d'onde selon l'une quelconque des revendications 1 - 4 , **caractérisé en ce que** chaque noeud (1) comprend en outre un deuxième multiplexeur ou élément de combinaison optique (45) ayant une sortie connectée une entrée du transpondeur en réserve (21) et ayant des entrées connectées aux émetteurs optiques ordinaires (7) du noeud, pour recevoir les premiers signaux optiques émis par les émetteurs optiques ordinaires et pour diriger vers le transpondeur de réserve du noeud les premiers signaux optiques reçus sur la sortie du deuxième multiplexeur ou élément de combinaison optique.

6. Réseau à multiplexage par répartition en longueur d'onde selon l'une quelconque des revendications 2 - 4, **caractérisé en ce que** chaque noeud (1) comprend en outre un deuxième commutateur optique (23) ayant une sortie et une multiplicité d'entrées, une entrée du deuxième commutateur optique étant adaptée et connectée à chaque transpondeur ordinaire (11), et la sortie du deuxième commutateur optique étant connectée à l'entrée du transpondeur en réserve (21), le deuxième commutateur optique étant agencé pour connecter une de ses entrées à sa sortie, afin de diriger vers le transpondeur en réserve du noeud les premiers signaux optiques émis par l'un des émetteurs optiques ordinaires (7) du noeud.

7. Réseau à multiplexage par répartition en longueur d'onde selon l'une quelconque des revendications 1 - 6, **caractérisé en ce que** chaque noeud (1) comprend en outre des émetteurs optiques en réserve (7'), un émetteur optique en réserve étant associé en une paire avec un émetteur optique ordinaire (7), l'émetteur optique en réserve et l'émetteur optique ordinaire d'une paire recevant les mêmes signaux électriques et convertissant les signaux électriques reçus en signaux optiques, et l'émetteur optique en réserve étant agencé pour émettre les signaux optiques vers l'autre noeud, si l'émetteur optique ordinaire est défaillant.

8. Réseau à multiplexage par répartition en longueur d'onde selon la revendication 7, **caractérisé en ce que** chaque noeud (1) comprend en outre des premiers commutateurs optiques (17), chaque premier commutateur optique étant connecté à un émetteur optique ordinaire (7) et un émetteur optique en réserve (7') d'une paire, pour acheminer des signaux optiques provenant d'un seul de l'émetteur optique ordinaire et de l'émetteur optique en réserve.

9. Réseau à multiplexage par répartition en longueur d'onde selon la revendication 8, **caractérisé en ce que** chaque premier commutateur optique (17) dans un noeud (1) est agencé pour connecter, dans une première position, l'émetteur optique ordinaire (7), auquel il est connecté, au transpondeur ordinaire (11) respectif agencé pour l'émetteur optique, et pour connecter, dans une deuxième position du premier commutateur optique, l'émetteur ordinaire au transpondeur en réserve (21).

10. Réseau à multiplexage par répartition en longueur d'onde selon la revendication 9, **caractérisé en ce que** dans la première position d'un des premiers commutateurs optiques (17) d'un noeud (1), l'émetteur optique en réserve (7') qui est connecté audit commutateur parmi les premiers commutateurs optiques, est connecté à travers ledit commutateur parmi les premiers commutateurs optiques, au transpondeur en réserve (21), à travers un deuxième commutateur (23), le deuxième commutateur permettant à des signaux optiques provenant d'au plus un émetteur optique en réserve d'atteindre le transpondeur en réserve.

11. Réseau à multiplexage par répartition en longueur d'onde selon la revendication 10, **caractérisé en ce que** dans la deuxième position d'un des premiers commutateurs optiques (17) d'un noeud (1), l'émetteur optique ordinaire (7) qui est connecté audit commutateur parmi les premiers commutateurs optiques est connecté à travers le premier commutateur optique au transpondeur en réserve (21), à travers le deuxième commutateur (23), le deuxième commutateur permettant à des signaux optiques provenant d'au plus un émetteur optique ordinaire (7) d'atteindre le transpondeur en réserve.

12. Réseau à multiplexage par répartition en longueur d'onde selon l'une quelconque des revendications 9 - 11, **caractérisé en ce que** dans la deuxième position d'un des premiers commutateurs optiques (17) d'un noeud (1), l'émetteur optique en réserve (7') qui est connecté audit commutateur parmi les premiers commutateurs optiques est connecté à un transpondeur ordinaire respectif (11).

13. Réseau à multiplexage par répartition en longueur d'onde selon l'une quelconque des revendications 1 - 12, **caractérisé en ce que** tous les récepteurs ordinaires (9) d'un noeud (1) sont connectés à un seul démultiplexeur ou filtre (15).

14. Réseau à multiplexage par répartition en longueur d'onde selon l'une quelconque des revendications 1 - 12, **caractérisé en ce que** tous les récepteurs ordinaires (9) d'un noeud (1) sont connectés à un seul démultiplexeur ou filtre (15), un commutateur (25) étant incorporé pour diriger un signal optique provenant du démultiplexeur ou du filtre vers au plus un des récepteurs ordinaires, ce signal optique étant dans la même bande de longueurs d'onde que les signaux optiques émis par le transpondeur en réserve (21).

15. Réseau à multiplexage par répartition en longueur d'onde selon l'une quelconque des revendications 1 - 14, **caractérisé en ce que** chaque noeud (1) comprend en outre des récepteurs optiques en réserve (9'), un récepteur optique en réserve étant associé en une paire avec un récepteur optique ordinaire (9), le récepteur optique en réserve et le récepteur optique ordinaire d'une paire convertissant en signaux électriques des signaux optiques reçus, et étant connectés pour émettre des signaux électriques vers la même borne de sortie, de façon que le récepteur optique en réserve fournisse des signaux électriques à la borne de sortie, noeud, si le récepteur optique ordinaire ne peut pas fournir des signaux électriques.

16. Réseau à multiplexage par répartition en longueur d'onde selon la revendication 15, **caractérisé en ce que** tous les récepteurs ordinaires (9) d'un noeud (1) sont connectés à un seul démultiplexeur ou filtre (15), chaque récepteur en réserve (9') étant connecté au démultiplexeur ou filtre à travers un commutateur (25), le commutateur ayant une multiplicité de sorties, chaque sortie étant connectée à l'un différent des récepteurs optiques en réserve, et le commutateur étant agencé pour diriger un signal provenant du démultiplexeur ou filtre vers au plus un des récepteurs optiques en réserve.

17. Réseau à multiplexage par répartition en longueur d'onde selon la revendication 16, **caractérisé en ce qu'**un signal qui est dirigé à partir du démultiplexeur ou filtre (15) vers l'un des récepteurs optiques en réserve (9') est dans la même bande de longueurs d'onde que les signaux optiques émis par un transpondeur en réserve (21) du noeud.

18. Réseau à multiplexage par répartition en longueur d'onde selon la revendication 16, **caractérisé en ce qu'**un signal qui est dirigé à partir du démultiplexeur ou filtre (15) d'un noeud (1) vers un des récepteurs optiques en réserve (9') du noeud (1) est dans la même bande de longueurs d'onde que les signaux optiques émis par l'émetteur ordinaire (7) dans la paire d'un émetteur ordinaire et du récepteur ordinaire (9) avec lequel le récepteur en réserve est inclus dans une paire.

19. Noeud (1) prévu pour être connecté à un autre noeud par une liaison optique bidirectionnelle dans un réseau à multiplexage par répartition en longueur d'onde (WDM) optique, le noeud comprenant
- au moins deux paires d'émetteurs optiques ordinaires (7) et de récepteurs optiques ordinaires (9), chaque paire incluant un émetteur optique ordinaire recevant des signaux électriques et convertissant les signaux électriques reçus en premiers signaux optiques émis, et un récepteur optique ordinaire recevant des signaux optiques et les convertissant en signaux électriques, et
- des transpondeurs ordinaires (11), chaque transpondeur ordinaire recevant les premiers signaux optiques émis provenant d'un seul des émetteurs optiques ordinaires des paires, et convertissant les signaux reçus en deuxièmes signaux optiques émis, d'une bande de longueurs d'onde bien définie, les bandes de longueurs d'onde des deuxièmes signaux optiques émis par différents transpondeurs parmi les transpondeurs ordinaires étant mutuellement séparées,
**caractérisé par**
- un premier multiplexeur ou élément de combinaison optique (13) connecté pour recevoir les deuxièmes signaux optiques émis par les transpondeurs ordinaires, le premier multiplexeur ou élément de combinaison optique combinant les deuxièmes signaux optiques pour émettre un signal optique combiné sur une fibre optique (3) incluse dans une liaison bidirectionnelle interconnectant le noeud et l'autre noeud, et
- un seul transpondeur en réserve (21) connecté pour recevoir, en cas de défaillance de n'importe lesquels des transpondeurs ordinaires (11), les premiers signaux optiques qui doivent être reçus par le transpondeur ordinaire, et pour convertir les premiers signaux optiques reçus en troisièmes signaux optiques émis, d'une bande de longueurs d'onde bien définie, séparée des bandes de longueurs d'onde des deuxièmes signaux optiques émis par les transpondeurs ordinaires, le transpondeur en réserve étant connecté au premier multiplexeur ou élément de combinaison optique (13) pour fournir les troisièmes signaux optiques au premier multiplexeur ou élément de combinaison optique qui combine les troisièmes signaux optiques émis par le transpondeur en réserve avec les deuxièmes signaux optiques émis par les transpondeurs ordinaires pour émettre un signal optique combiné sur la fibre optique (3).

20. Noeud selon la revendication 19, **caractérisé par** des premiers commutateurs optiques (17 ; 41), chaque premier commutateur optique ayant une entrée et une première sortie et une deuxième sortie, l'entrée du premier commutateur optique étant connectée à l'un des émetteurs optiques ordinaires et la première sortie étant connectée au transpondeur ordinaire (11) qui est connecté pour recevoir les premiers signaux optiques émis par ledit émetteur parmi les émetteurs optiques ordinaires pour diriger vers ce transpondeur ordinaire des signaux optiques reçus sur l'entrée du premier commutateur optique, et la deuxième sortie étant connectée au transpondeur en réserve (21) pour diriger vers le transpondeur en réserve des signaux optiques reçus sur l'entrée du premier commutateur optique, en fonction d'une position du premier commutateur optique.

21. Noeud selon la revendication 20, **caractérisé en ce que** chaque transpondeur ordinaire (11) est muni d'un détecteur de perte d'entrée (27) commandant le premier commutateur optique (17), dont la première sortie est connectée au transpondeur ordinaire.

22. Noeud selon la revendication 19, **caractérisé par** des diviseurs de puissance optiques (35 ; 47), chaque diviseur de puissance optique ayant une entrée et une première sortie et une deuxième sortie, l'entrée du diviseur de puissance optique étant connectée à l'un des émetteurs optiques ordinaires (7) pour recevoir des signaux émis par ledit émetteur parmi les émetteurs optiques ordinaires, et la première sortie du diviseur de puissance optique étant connectée au transpondeur ordinaire (11) qui est connecté pour recevoir les premiers signaux optiques émis par ledit émetteur parmi les émetteurs ordinaires pour diriger vers ce transpondeur ordinaire une première fraction des signaux optiques reçus sur l'entrée, et la deuxième sortie du diviseur de puissance optique étant connectée pour diriger vers le transpondeur en réserve (21) une seconde fraction des signaux optiques reçus sur l'entrée.

23. Noeud selon l'une quelconque des revendications 19 - 22, **caractérise par** un deuxième multiplexeur ou élément de combinaison optique (45) ayant une sortie connectée à une entrée du transpondeur en réserve (21) et ayant des entrées connectées aux émetteurs optiques ordinaires (7) pour recevoir les premiers signaux optiques émis par les émetteurs optiques ordinaires et pour diriger vers le transpondeur de réserve les premiers signaux optiques reçus sur la sortie du deuxième multiplexeur ou élément de combinaison optique.

24. Noeud selon l'une quelconque des revendications 19 - 22, **caractérisé par** un deuxième commutateur optique (23) ayant une sortie et une multiplicité d'entrées, une entrée du deuxième commutateur optique étant adaptée et connectée à chaque transpondeur ordinaire (11), et la sortie du deuxième commutateur optique étant connectée à l'entrée du transpondeur en réserve (21), le deuxième commutateur optique étant agencé pour connecter une de ses entrées à sa sortie, afin de diriger vers le transpondeur en réserve les premiers signaux optiques émis par l'un des émetteurs optiques ordinaires (7).

25. Noeud selon l'une quelconque des revendications 19 - 24, **caractérisé par** des émetteurs optiques en réserve (7¹), un émetteur optique en réserve étant associé en une paire avec un émetteur optique ordinaire (7), l'émetteur optique en réserve et l'émetteur optique ordinaire d'une paire recevant les mêmes signaux électriques et convertissant en signaux optiques les signaux électriques reçus, et l'émetteur optique en réserve étant agencé pour émettre les signaux optiques vers l'autre noeud s'il se produit une défaillance de l'émetteur optique ordinaire.

26. Noeud selon la revendication 25, **caractérisé par** des premiers commutateurs optiques (17), chaque premier commutateur étant connecté à un émetteur optique ordinaire (7) et un émetteur optique en réserve (7') d'une paire pour acheminer des signaux optiques provenant d'un seul de l'émetteur optique ordinaire et de l'émetteur optique en réserve.

27. Noeud selon la revendication 26, **caractérisé en ce que** chaque premier commutateur optique (17) est agencé pour connecter, dans une première position, l'émetteur optique ordinaire (7), auquel il est connecté, au transpondeur ordinaire (11) respectif agencé pour l'émetteur optique, et pour connecter, dans une deuxième position du premier commutateur optique, l'émetteur ordinaire au transpondeur en réserve (21).

28. Noeud selon la revendication 27, **caractérisé en ce que** dans la première position d'un des premiers commutateurs optiques (17), l'émetteur optique en réserve (7') qui est connecté audit commutateur parmi les premiers commutateurs optiques est connecté à travers ledit commutateur parmi les premiers commutateurs optiques au transpondeur en réserve (21) à travers un deuxième commutateur (23), le deuxième commutateur permettant à des signaux optiques provenant d'au plus un émetteur optique en réserve, d'atteindre le transpondeur en réserve.

29. Noeud selon la revendication 28, **caractérisé en ce que** dans la deuxième position d'un des premiers commutateurs optiques (17), l'émetteur optique ordinaire (7) qui est connecté audit commutateur parmi les premiers commutateurs optiques est connecté à travers le premier commutateur optique au transpondeur en réserve (21) à travers le deuxième commutateur (23), le deuxième commutateur permettant à des signaux optiques provenant d'au plus un émetteur optique ordinaire (7) d'atteindre le transpondeur en réserve.

30. Noeud selon l'une quelconque des revendications 27 - 29, **caractérisé en ce que** dans la deuxième position d'un des premiers commutateurs optiques (17), l'émetteur optique en réserve (7') qui est connecté audit commutateur parmi les premiers commutateurs optiques est connecté à un transpondeur ordinaire (11) respectif.

31. Noeud selon l'une quelconque des revendications 19 - 30, **caractérisé en ce que** tous les récepteurs ordinaires (9) sont connectés à un seul démultiplexeur ou filtre (15).

32. Noeud selon l'une quelconque des revendications 19 - 31, **caractérisé en ce que** tous les récepteurs ordinaires (9) sont connectés à un seul démultiplexeur ou filtre (15), un commutateur (25) étant incorporé pour conduire un signal optique du démultiplexeur ou filtre vers au plus un des récepteurs ordinaires, ce signal optique étant dans la même bande de longueurs d'onde que les signaux optiques émis par le transpondeur en réserve (21).

33. Noeud selon l'une quelconque des revendications 19 - 32, **caractérisé par** des récepteurs optiques en réserve (9'), un récepteur optique en réserve étant associé en une paire avec un récepteur optique ordinaire (9), le récepteur optique en réserve et le récepteur optique ordinaire d'une paire convertissant en signaux électriques des signaux optiques reçus, et étant connectés de façon à émettre des signaux électriques vers la même borne de sortie, de façon que le récepteur optique en réserve fournisse des signaux électriques à la borne de sortie, si le récepteur optique ordinaire ne peut pas fournir des signaux électriques.

34. Noeud selon la revendication 33, **caractérisé en ce que** tous les récepteurs ordinaires (9) sont connectés à un seul démultiplexeur ou filtre (15), chaque récepteur en réserve (9') étant connecté au démultiplexeur ou filtre à travers un commutateur (25), le commutateur ayant une multiplicité de sorties, chaque sortie étant connectée à l'un différent des récepteurs optiques en réserve, et le commutateur étant agencé pour diriger un signal provenant du démultiplexeur ou filtre vers au plus un des récepteurs optiques en réserve.

35. Noeud selon la revendication 34, **caractérisé en ce qu'**un signal qui est dirigé à partir du démultiplexeur ou filtre (15) vers l'un des récepteurs optiques en réserve (9') est dans la même bande de longueurs d'onde que les signaux optiques émis par un transpondeur en réserve (21).

36. Noeud selon la revendication 34, **caractérisé en ce qu'**un signal qui est dirigé à partir du démultiplexeur ou filtre (15) vers un des récepteurs optiques en réserve (9') est dans la même bande de longueurs d'onde que les signaux optiques émis par l'émetteur ordinaire (7) dans la paire d'un émetteur ordinaire et du récepteur ordinaire (9), avec lequel le récepteur en réserve est inclus dans une paire.
